(19) Europäisches Patentamt

European Patent Office

Office européen des brevets

(11) **EP 1 461 545 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(21) Anmeldenummer: **02792619.5**

(22) Anmeldetag: **29.11.2002**

(51) Int Cl.:
**F16H 61/00** (2006.01)

(86) Internationale Anmeldenummer:
**PCT/DE2002/004384**

(87) Internationale Veröffentlichungsnummer:
**WO 2003/060352 (24.07.2003 Gazette 2003/30)**

(54) **STEUERSCHALTUNG UND VERFAHREN ZUR ERZEUGUNG EINES STEUERSIGNALS ZUR STEUERUNG EINES STUFENLOS VERSTELLBAREN UMSCHLINGUNGSGETRIEBES**

CONTROL CIRCUIT AND METHOD FOR PRODUCING A CONTROL SIGNAL FOR CONTROLLING A CONTINUOUSLY VARIABLE TRANSMISSION

CIRCUIT DE COMMANDE ET PROCEDE POUR GENERER UN SIGNAL DE COMMANDE POUR COMMANDER UNE TRANSMISSION A VARIATION CONTINUE

(84) Benannte Vertragsstaaten:
**BE DE FR**

(30) Priorität: **29.12.2001 DE 10164490**

(43) Veröffentlichungstag der Anmeldung:
**29.09.2004 Patentblatt 2004/40**

(73) Patentinhaber: **ROBERT BOSCH GMBH 70442 Stuttgart (DE)**

(72) Erfinder: **LUH, Joachim 74321 Bietigheim-Bissingen (DE)**

(56) Entgegenhaltungen:
**DE-A- 19 649 483     US-A- 4 721 019
US-A- 5 947 862**

EP 1 461 545 B1

**Beschreibung**

Stand der Technik

Die Erfindung betrifft eine Steuerschaltung zur Erzeugung eines Steuersignals zur Steuerung eines in seiner Übersetzung stufenlos verstellbaren Umschlingungsgetriebes nach dem Oberbegriff des Anspruchs 1 beziehungsweise und ein Verfahren zur Erzeugung eines Steuersignals nach dem Oberbegriff des Anspruchs 10.

Eine solche Steuerschaltung und ein solches Verfahren sind aus US-A-4 721 019 bekannt.

Ein in seiner Übersetzung stufenlos verstellbares Umschlingungsgetriebe mit einer Antriebsseite, einer Abtriebsseite und einem von einem Steuersignal angesteuerten Primärventil zur Einstellung der Getriebeübersetzung ist beispielsweise aus der DE 196 49 483 A1 bekannt. Eine Steuerschaltung erzeugt ein Steuersignal in Abhängigkeit von der Steuerschaltung übermittelten Betriebsparametern des Fahrzeugs, wie beispielsweise der Primärdrehzahl, der Sekundärdrehzahl und der Stellung des Fahrpedals.

Vorteile der Erfindung

Mittels der erfindungsgemäßen Steuerschaltung wird.vorteilhaft erreicht, daß die Geschwindigkeit deutlich erhöht werden kann, mit der eine Hochschaltung der Übersetzung des stufenlosen Umschlingungsgetriebes erfolgen kann. Vorteilhaft wird das die Übersetzung einstellende Steuersignal in Abhängigkeit von der gewünschten Geschwindigkeit der Übersetzungsänderung oder einer daraus abgeleiteten Größe erzeugt, wobei der Wert für die gewünschte Geschwindigkeit der Übersetzungsänderung aus den der Steuerschaltung übermittelten Betriebsparametern ermittelt wird.

Vorteilhaft kann die Steuerschaltung die gewünschte Geschwindigkeit der Übersetzungsänderung beziehungsweise den gewünschten Übersetzungsgradienten in Abhängigkeit von einer gewünschten Übersetzung beziehungsweise einer Sollübersetzung ermitteln. Eine Sollprimärdrehzahl dient als Schnittstelle zum Fahrprogramm. Durch die Verwendung einer gefilterten Referenzdrehzahl zur Berechnung der gewünschten Übersetzung haben Schwingungen des Triebstrangs keinen Einfluß auf die Steuerung der Übersetzung.

Durch Vermeidung einer zu kleinen primärseitigen Anpreßkraft bei Stillstand des Variators wird bei auf die Primärseite übertragenen hohen Drehmomenten ein Schlupf des Umschlingungsteils vermieden.

Zeichnungen

Ausführungsbeispiele der Erfindung sind in den Zeichnungen dargestellt und werden in der nachfolgenden Beschreibung erläutert. Es zeigt

Fig. 1 ein Übersichtsbild eines kontinuierlich verstellbaren Getriebes,
Fig. 2a und Fig. 2b ein Blockschaltbild der Steuerschaltung,
Fig. 3 bis Fig. 10 einzelne Teile der in Fig. 2a und 2b gezeigten Steuerschaltung.

Beschreibung der Ausführungsbeispiele

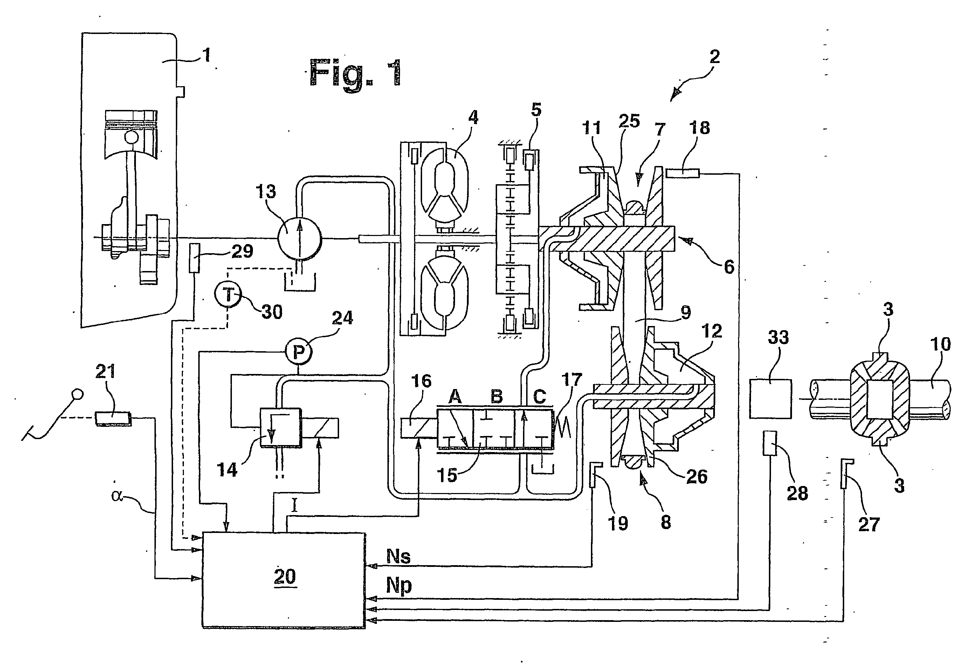

In Fig. 1 ist mit dem Bezugszeichen 2 ein stufenlos verstellbares Umschlingungsgetriebe zum Zwecke der Kraftübertragung vom Motor 1 zu den Antriebswellen 3 der Räder eines Kraftfahrzeuges dargestellt. Ein solches stufenloses Getriebe hat beispielsweise einen Drehmomentwandler 4 und ein Planetengetriebe mit Kupplungen 5 für Vorwärts- und Rückwärtsfahrtumschaltungen, die zwischen dem Motor 1 und einem Variator 6 angeordnet sind. Der Variator 6 weist vorzugsweise einen antriebsseitigen Kegelscheibensatz 7 und einen abtriebsseitigen Kegelscheibensatz 8 auf. Jeder Kegelscheibensatz besteht aus einer axial feststehenden und einer als Stellglied vorgesehenen axial beweglichen Scheibe. So weist der antriebsseitige Kegelscheibensatz 7 beispielsweise die axial verschiebbare Kegelscheibe 25 und der abtriebsseitige Kegelscheibensatz 8 die axial verschiebbare Kegelscheibe 26 auf. Die axial beweglichen Kegelscheiben 25 und 26 sind hydraulisch verstellbar und besitzen dazu die Fluidkammern 11 und 12, welche beispielsweise mit Öl als Fluid füllbar sind. Der abtriebsseitige Kegelscheibensatz 8 ist über ein Ausgleichsgetriebe 10 mit den Antriebswellen 3 der Räder verbunden. Auf der Abtriebsseite können zusätzlich noch schaltbare Getriebestufen 33 zwischen dem Kegelscheibensatz 8 und der Antriebswelle 3 der Räder vorgesehen sein. Mit Hilfe eines als Kette oder Schubgliederband ausgebildeten Umschlingungsteils 9 wird die Kraft von dem antriebsseitigen Kegelscheibensatz 7 zum abtriebsseitigen Kegelscheibensatz 8 übertragen. Durch gleichzeitige Variation der axial beweglichen Scheiben 25,26 auf dem Antriebs- und dem Abtriebsscheibensatz ändert sich die Übersetzung des Variators 6 zwischen einer hohen Anfahrübersetzung, in der Stellung "Low" und einer niedrigen Übersetzung, in der Stellung "Overdrive".

Die antriebsseitige primäre Fluidkammer und die abtriebsseitige sekundäre Fluidkammer können beispielsweise über eine Ölpumpe 13 mit Drucköl versorgt werden. Natürlich kann auch ein anderes Fluid verwandt werden. Zur Druckölversorgung kann die Ölpumpe 13 beispielsweise mit der Drehzahl des verbrennungsmotors 1 laufen. Die Spannung des Umschlingungsteils 9 kann mit Hilfe eines Druckbegrenzungsventils 14 eingestellt werden, welches den Öldruck in der sekundären Fluidkammer 12 reguliert. Die Getriebeübersetzung wird mit Hilfe eines als Proportionalventil ausgebildeten Primärventils 15 an der Primärseite eingestellt.

Das als Proportionalventil ausgebildete Primärventil 15 kann in der Stellung A Öl aus der antriebsseitigen Fluidkammer 11 ablassen und somit den Druck vermindern, wodurch sich die Übersetzung in Richtung "Low" verstellt. In der Stellung C fließt Öl in die antriebsseitige Fluidkammer 11, wodurch sich die Übersetzung in Richtung "Overdrive" verändert und der Druck in der antriebsseitigen Fluidkammer 11 ansteigt. In der Stellung B des Proportionalventils 15 ist die Fluidkammer 11 abgedichtet, das heißt, es kann nahezu kein Öl aus der Fluidkammer 11 zu- oder abfließen. Das Primärventil 15 kann direkt oder auch durch ein Vorsteuerventil in bekannter Weise angesteuert werden. In dem hier beschriebenen Ausführungsbeispiel wird durch einen aus dem erzeugten Steuersignal I resultierenden Strom in einem Magneten 16 eine Kraft auf den Ventilschieber erzeugt. Durch die am Ventilschieber vorhandene Feder 17 stellt sich eine bestimmte Stellung des Primärventils 15 ein. Das bedeutet, daß der von dem Steuersignal I vorgegebene Strom durch den Magneten 16 die Stellung des als Proportionalventils ausgebildeten Primärventils 15 und damit den Öffnungsquerschnitt des Ventils bestimmt.

Wie in Fig. 1 zu erkennen ist, erfaßt ein Drehzahlgeber 18 die Primärdrehzahl $N_p$ des antriebsseitigen Kegelscheibensatzes 7 und ein Drehzahlgeber 19 die Sekundärdrehzahl $N_s$ des abtriebsseitigen Kegelscheibensatzes 8. Weiterhin ist ein Sensor 27 dargestellt, welcher die Fahrzeuggeschwindigkeit $V_{Fz}$ erfaßt und ein Sensor 24, welcher den Sekundärdruck $p_s$ erfaßt, der auch auf die sekundäre abtriebsseitige Fluidkammer 12 einwirkt. Die Signale für die Primärdrehzahl $N_p$, die Sekundärdrehzahl $N_s$, die Fahrzeuggeschwindigkeit $V_{Fz}$ und den Sekundärdruck $p_s$ werden einem Getriebesteuergerät 20 zugeführt, in dem eine Steuerschaltung angeordnet ist. Diese kann natürlich auch in einem Motorsteuergerät oder aber in mehreren miteinander verbundenen Steuergeräten oder Steuermodulen angeordnet sein. Die von Sensoren erfaßten und der Steuerschaltung übermittelten Daten werden im folgenden Betriebsparameter genannt. Die Steuerschaltung des Getriebesteuergerätes 20 erzeugt in Abhängigkeit von den der Steuerschaltung zugeführten Betriebsparametern für den Fahrzustand des Kraftfahrzeugs ein Steuersignal I, welches das Primärventil 15 einstellt.

Wie in Fig. 1 dargestellt, ist beispielsweise noch ein Sensor 21 zur Ermittlung der Stellung $\alpha$ des vom Fahrer betätigbaren Fahrpedals und ein Sensor 29 zur Übermittlung eines Signals für die Motordrehzahl $N_{mot}$ an die Steuerschaltung angeschlossen. Falls schaltbare Getriebestufen 33 vorhanden sind, können Mittel 28 zur Erfassung des Übersetzungsverhältnisses $i_{ab}$ dieser Getriebestufen vorhanden sein. Die Übersetzung i des Variators 6 muß nicht notwendiger Weise aus der Primärdrehzahl $N_p$ und Sekundärdrehzahl $N_s$ abgeleitet werden und kann statt dessen auch mit anderen Sensoren gemessen werden. Beispielsweise kann hierfür ein Sensor zur Messung der axialen Verschiebung der primären beweglichen Kegelscheibe 25 vorgesehen sein. Die Signale für die Betriebsparameter, insbesondere die Signale für die Fahrzeuggeschwindigkeit, die Motordrehzahl und die Stellung des Fahrpedals können dem Steuergerät 20 auch von einem anderen Steuergerät beispielsweise von einem CAN-Bus übermittelt werden. Die Fahrzeuggeschwindigkeit kann auch mit Hilfe eines Beobachters aus den Raddrehzahlsignalen und gegebenenfalls weiteren Signalen gewonnen werden. Es ist auch möglich, anstelle der Fahrzeuggeschwindigkeit die Abtriebsdrehzahl des Getriebes zu verwenden. Zusätzlich kann noch ein Temperatursensor 30 vorhanden sein, welcher dem Steuergerät 20 ein Signal für die Temperatur T des Drucköls übermittelt.

Weiterhin wird dem Steuergerät ein Signal für das Motorausgangsmoment $M_{mot}$ übermittelt oder aus den der Steuerschaltung übermittelten Betriebsparametern in an sich bekannter Weise berechnet. Ein Verfahren zur Erfassung des Motorausgangsmoments $M_{mot}$ ist beispielsweise in der DE 199 28 292 A1 beschrieben.

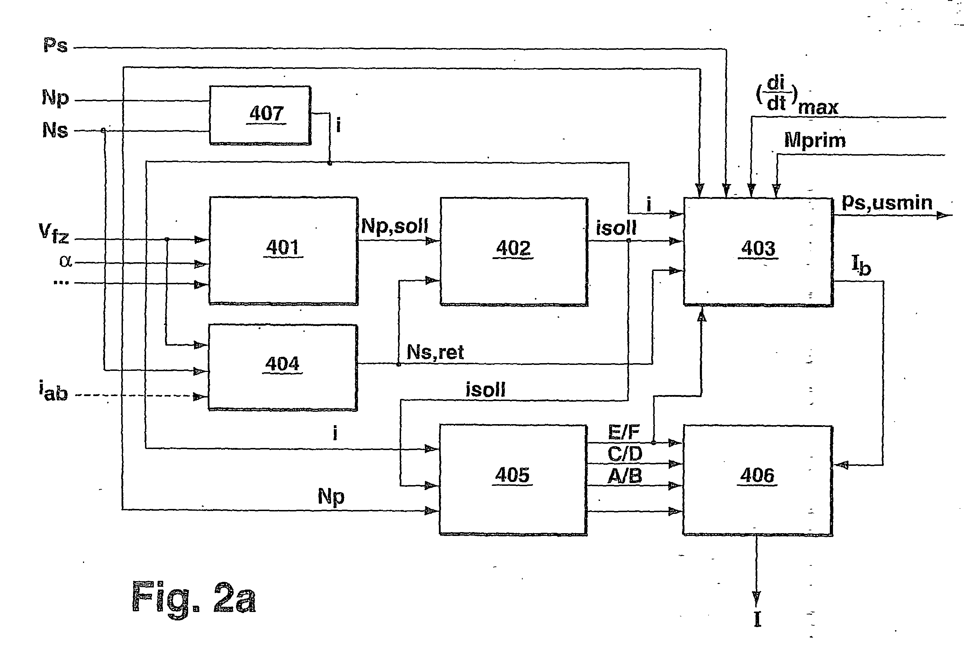

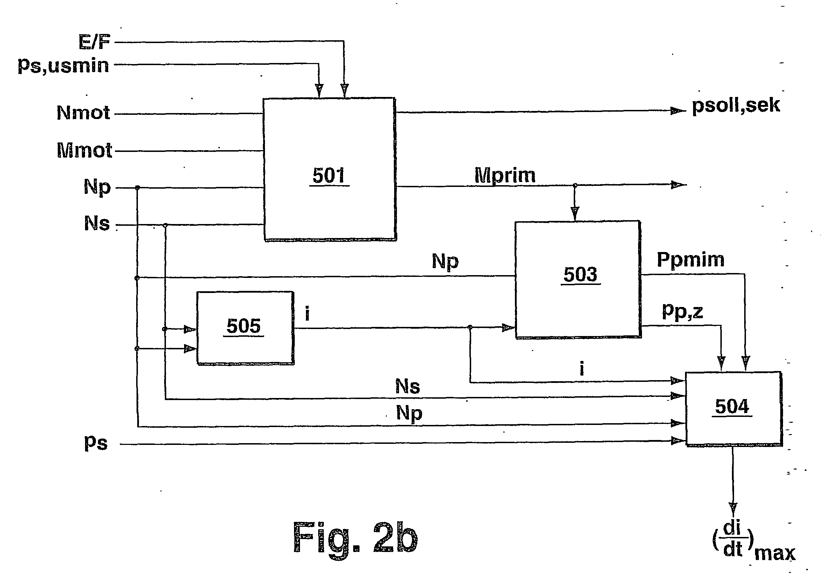

Die Fig. 2a zeigt schematisch im Überblick die nähere Ausgestaltung eines Teils der in dem Steuergerät 20 angeordneten Steuerschaltung zur Einstellung der Getriebeübersetzung. In der Fig. 2b ist ein weiterer Schaltungsteil im Überblick dargestellt, welcher unter anderem der Einstellung der Spannung des Umschlingungsteils des Umschlingungsgetriebes dient.

Der Block 401 in Fig. 2a berechnet eine Sollprimärdrehzahl $N_{p,soll}$ aus verschiedenen dem Steuergerät übermittelten Betriebsparamtern wie der Fahrpedalstellung $\alpha$ und der Fahrzeuggeschwindigkeit $V_{Fz}$. Die berechnete Sollprimärdrehzahl $N_{p,soll}$ entspricht einer gewünschten Übersetzung des Variators 6.

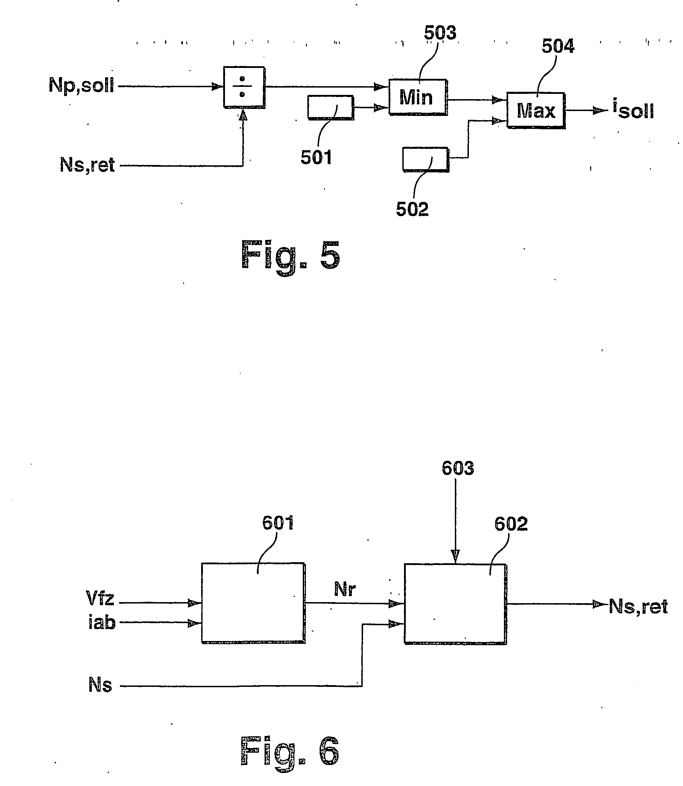

Im Block 404 wird aus dem Wert für die Fahrzeuggeschwindigkeit $V_{Fz}$, dem Wert für die Sekundärdrehzahl $N_s$ und - falls schaltbare Getriebestufen vorhanden sind - dem Wert für die Übersetzung $i_{ab}$ der abtriebsseitigen Getriebestufen 33 ein Referenzdrehzahlsignal $N_{s,ref}$ gebildet, wie weiter unten anhand der Fig. 6 noch erklärt wird.

Im Block 402 wird aus der von dem Block 401 übermittelten Sollprimärdrehzahl $N_{p,soll}$ und dem von dem Block 404 übermittelten Wert für die Referenzdrehzahl $N_{s,ref}$ die gewünschte Übersetzung $i_{soll}$ des Variators 6 berechnet und den Blöcken 403 und 405 übermittelt. Es ist aber auch möglich, die gewünschte Übersetzung $i_{soll}$ durch ein Fahrprogramm bereitzustellen.

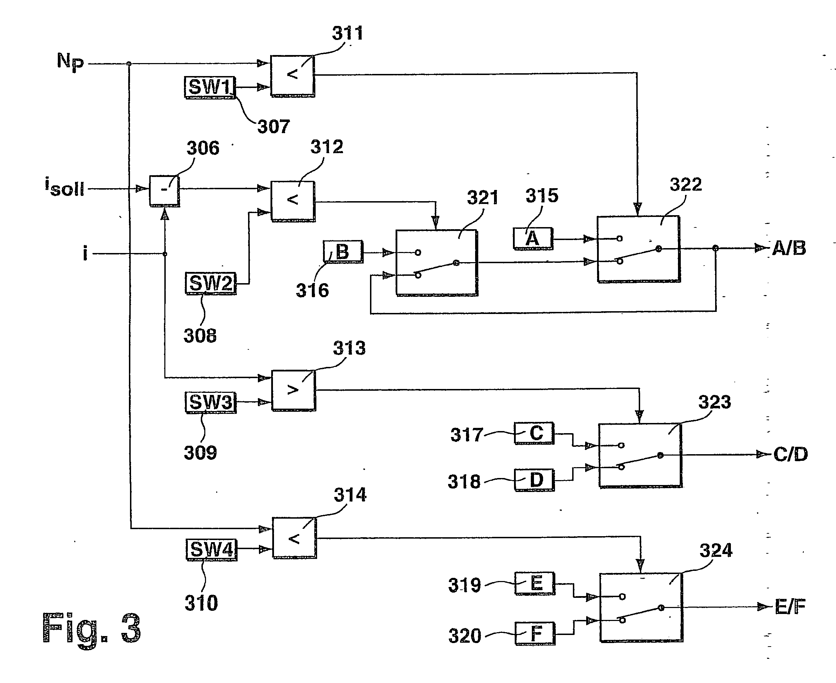

Im Block 405 werden drei Statussignale A/B, C/D und E/F gebildet, die verschiedenen Betriebsarten des Umschlingungsgetriebes 2 entsprechen. Die Funktionsweise des Blockes 405 wird weiter unten anhand der Figur 3 noch genauer beschrieben.

Der Block 407 berechnet aus den Werten für die Primärdrehzahl $N_p$ der Antriebsseite 7 und die Sekundärdrehzahl $N_s$ der Abtriebsseite 8 die Getriebeübersetzung nach der Gleichung:

$$i = N_p/N_s \quad .$$

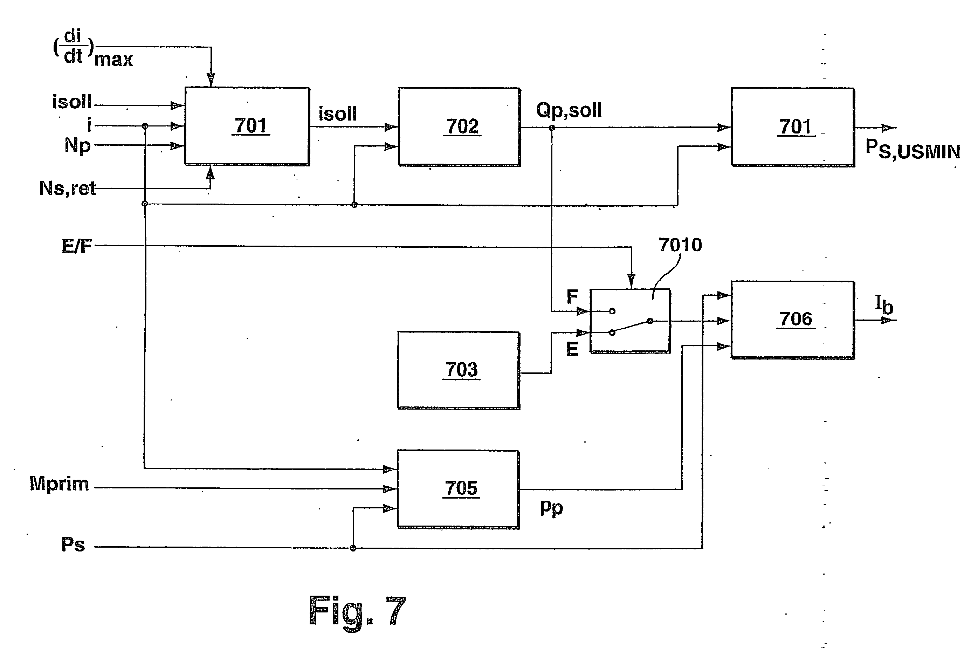

Der zentrale Block 403 berechnet schließlich aus den Werten für die Ist-Übersetzung i, für die gewünschte Übersetzung $i_{soll}$, für die Referenzdrehzahl $N_{s,ref}$, für den Sekundärdruck $p_s$, für die Primärdrehzahl $N_p$ und den Werten für das primärseitig wirkende Drehmoment $M_{prim}$ und einem Wert für die maximale zulässige Änderung der Übersetzung (di/dt)max in Abhängigkeit von dem Zustandssignal E/F ein Stromsignal $I_b$, welches dem Block 406 übermittelt wird. Das Stromsignal $I_b$ entspricht einem vorläufigen Stellsignal für das Primärventil 15. Zur Berechnung werden die üblichen Algorithmen zur Positionsregelung von Hydraulikzylindern verwendet. Die Funktionsweise des Blockes 403 ist in der Figur 7 ausführlich dargestellt und wird weiter unten beschrieben. Die Werte für das primärseitig wirkende Drehmoment $M_{prim}$ und die maximale zulässige Änderung der Übersetzung, beziehungsweise für den maximal zulässigen Übersetzungsgradienten (di/dt)max werden dem Block 403 von' dem in Fig. 2b dargestellten Schaltungsteil übermittelt. Außerdem berechnet der Block einen Wert für einen minimalen Sekundärdruck $p_{s,USMIN}$, welcher erforderlich ist, um mit dem Primärventil einen gewünschten Volumenstrom $Q_{p,soll}$ in die primäre Ölkammer 11 insbesondere für den Fall eines schnellen Hochschaltens einstellen zu können.

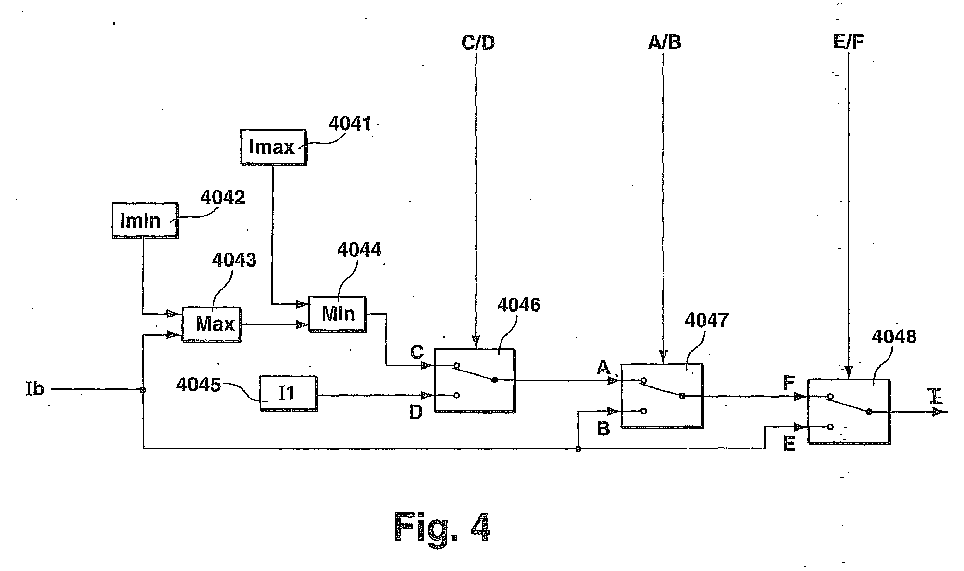

Im Block 406 wird das Stromsignal $I_b$ in Abhängigkeit von den durch den Block 405 erzeugten Signalen A/B, C/D und E/F begrenzt, wie anhand der Fig. 4 noch genauer beschrieben wird.

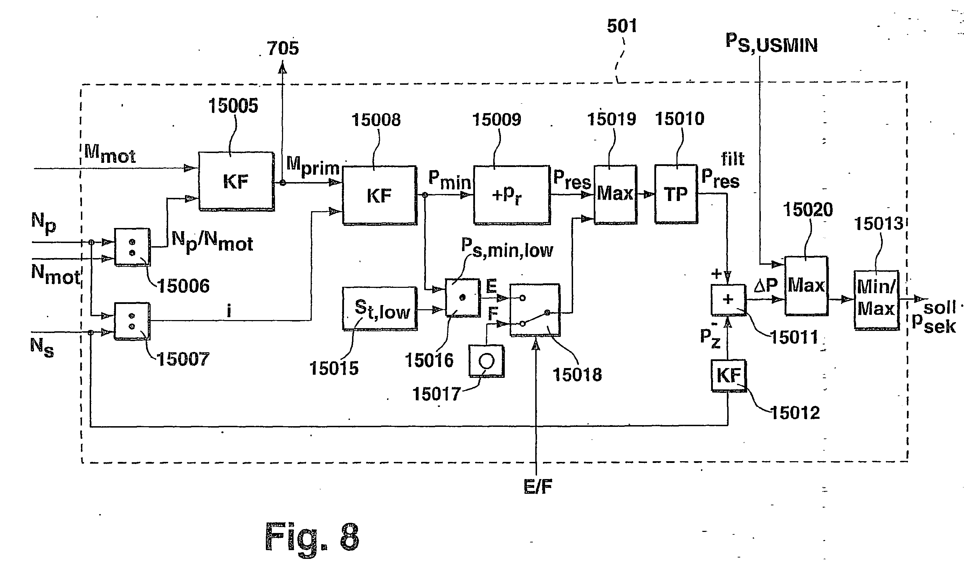

Die Fig. 2b zeigt einen Schaltungsteil, welcher in dem Block 501 aus den dem Steuergerät übermittelten Betriebsparametern für die Primärdrehzahl $N_p$, die Sekundärdrehzahl $N_s$, das Motormoment $M_{mot}$, die Drehzahl $N_{mot}$ an der Motorausgangsseite, und aus dem von dem Block 403 in Fig. 2a übermittelten Wert für den minimalen Sekundärdruck $p_{s,USMIN}$ und dem vom Block 405 in Fig. 2a übermittelten Zustandssignal E/F einen Solldekundärdruck $p_{soll,sek}$ für die sekundäre Ölkammmer 12 berechnet. Die Funktionsweise des Blocks 501 wird weiter unten anhand der Fig. 8 erläutert.

Der Block 505 berechnet die Ist-Übersetzung i aus der Primärdrehzahl Np und der Sekundärdrehzahl $N_s$. Dieser Wert kann aber auch von dem Block 407 in Fig. 2a oder durch einen weiteren Sensor geliefert werden.

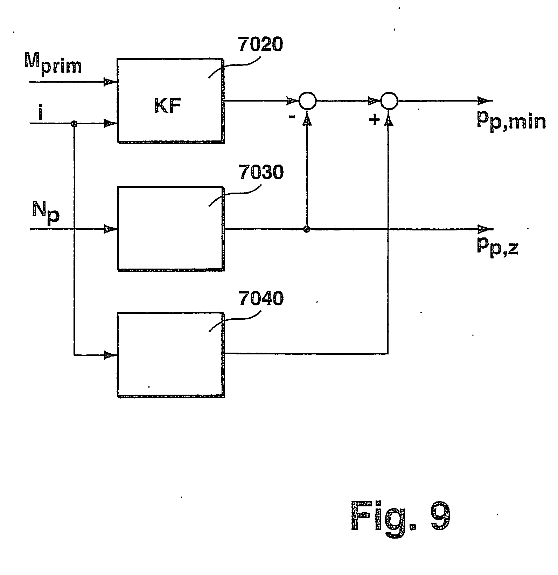

Der Block 503 berechnet aus den Werten $M_{prim}$, $N_p$ und i die Werte $p_{pmin}$ und $p_{p,z}$. Der Block 503 wird anhand der Fig. 9 erläutert.

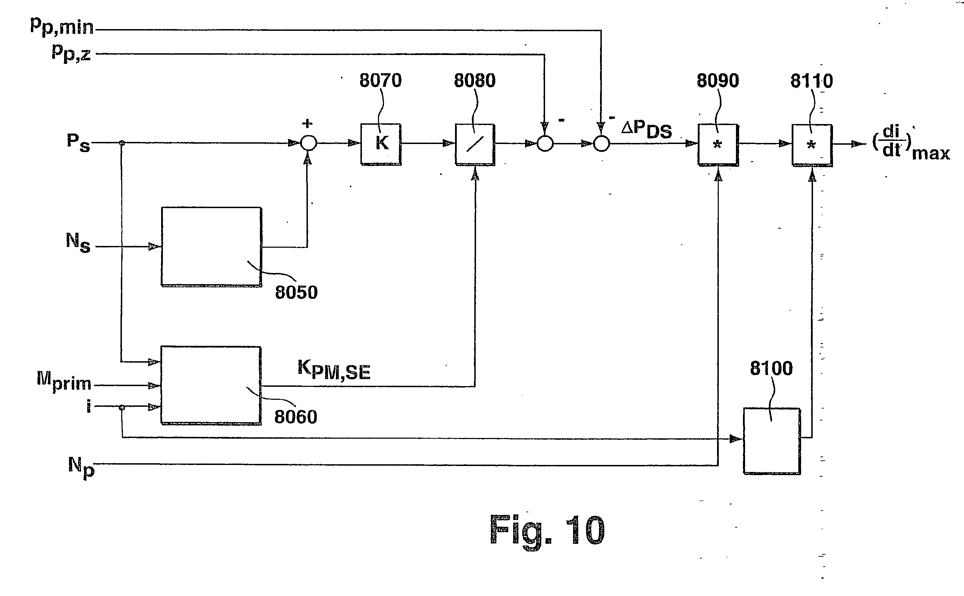

Der Bock 504 berechnet schließlich aus den Signalen $N_p$, $N_s$, i, $p_s$ und den von dem Block 503 gelieferten Werten $P_{pmin}$ und $p_{p,z}$ den maximal zulässigen Übersetzungsgradienten (di/dt)max. Dies wird weiter unten anhand der Fig. 10 erläutert.

Die Fig. 3 zeigt eine Ausgestaltung des Blocks 405 zur bestimmung der Betriebsart des Umschlingungsgetriebes. Der Block 405 bildet ein erstes Zustandssignal A/B, das entweder den Wert A oder den Wert B annehmen kann, ein zweites Zustandssignal C/D, das entweder den Wert C oder D annehmen kann, und ein drittes Zustandssignal, das entweder den Wert E oder den Wert F annehmen kann. Das erste Zustandssignal wird dann auf den Wert A gesetzt, wenn die momentane Primärdrehzahl $N_p$ kleiner als ein Schwellwert SW1 ist. Dies geschieht durch die Schwellwertspeicherung 307 mittels des Vergleichs 311. Abhängig von dem Vergleich 311 wird der Schalter 322 derart umgelegt, daß der Signalwert A (315) ausgangsseitig des Blocks 405 anliegt.

Im Block 306 wird die Differenz zwischen der momentanen Übersetzung i und der gewünschten Übersetzung $i_{soll}$ gebildet und im Block 312 mit dem Schwellwert SW2 (308) verglichen. Unterschreitet die im Block 312 gebildete Differenz den Schwellwert SW2, so wird der Schalter 321 auf den Wert B (316) umgelegt. Überschreitet gleichzeitig die momentane Primärdrehzahl Np den Schwellwert SW1 (vgl. 311), so wird der Schalter 322 wie in der Fig. 3 zu sehen ist, mit dem Schalter 321 verbunden. Wenn die Primärdrehzahl Np also größer ist als der Schwellwert SW1 und gleichzeitig die Differenz zwischen der momentanen Übersetzung i und der gewünschten Übersetzung $i_{soll}$ kleiner als ein Schwellwert SW2 ist, dann wird das erste Zustandssignal auf den Wert B gesetzt. Ist dies auch nicht der Fall, dann behält das Zustandssignal seinen bisherigen Zustand.

Das zweite Zustandssignal C/D wird auf den Wert C gesetzt, wenn die momentane Übersetzung i größer ist als ein Schwellwert SW3 (309). Hierzu dient der Schwellwertvergleich 313 und der Schalter 323 bzw. die Speicher 317 und 318. Unterschreitet die momentane Übersetzung i den Schwellwert SW3, wird das zweite Zustandssignal auf den Wert D gesetzt.

Das dritte Zustandssignal E/F wird auf den Wert E gesetzt, wenn die Primärdrehzahl Np kleiner ist als ein Schwellwert SW4 (310). Hierzu dient der Schwellwertvergleich 314 und der Schalter 324 bzw. die Speicher 319 und 320. Das heißt, das dritte Zustandssignal nimmt den Wert E an, wenn der Variator nahezu still steht. Überschreitet die Primärdrehzahl Np den Schwellwert SW4, wird das zweite Zustandssignal auf den Wert F gesetzt.

Bei der in der Fig. 2a gezeigten Steuerschaltung 20 wird das Ansteuersignal $I_b$ in dem Block 406 zu dem tatsächlichen Ansteuersignal I für das Primärventil 15 beziehungsweise für den Magneten 16 des Primärventils weiterverarbeitet. Für diese Weiterverarbeitung werden dem Block 406 die Zustandssignale von dem schon anhand der Figur 3 beschriebenen Block 405 zugeführt, die den Signalwert A bzw. B, den Signalwert C bzw. D und den Signalwert E bzw. F annehmen können. Der Block 406 liefert das endgültige Steuersignal I für den Magneten 16 des Proportionalventils 15, das heißt, das Steuersignal I bestimmt die Stellung und damit den Öffnungsquerschnitt des Ventils 15. Der Block 406 ist in der Fig. 4 dargestellt.

Wenn das erste Zustandssignal den Wert A aufweist, das zweite Zustandssignal den Wert D und das dritte Zustandssignal den Wert F, dann wird das Stromsignal I auf einen Wert I1 (4045) gesetzt, bei dem das Proportionalventil 15 geschlossen ist. In diesem Fall bleibt die momentan eingestellte Übersetzung konstant. Das Setzen des Stromsignals auf den Wert I1 geschieht durch eine entsprechende Ansteuerung der Schalter 4047, 4046 und 4048. Dies bedeutet, daß bei nicht stillstehendem Variator, keine Änderung der Getriebeübersetzung dann stattfindet, wenn die momentane Primärdrehzahl den Schwellwert SW1 unterschreitet und die momentane Übersetzung i den Schwellwert SW3 unterschreitet.

Wenn das erste Zustandssignal den Wert A aufweist, das zweite Zustandssignal den Wert C und das dritte Zustandssignal den Wert F, dann wird das vom Block 403 kommende Signal $I_b$ auf einen einstellbaren minimalen Wert $I_{min}$ (4042) bzw. einen einstellbaren maximalen Wert $I_{max}$ (4041) begrenzt. Diese Begrenzung geschieht durch die Maximal- bzw. Minimalauswahl 4043 und 4044. Das heißt, daß in diesem Fall die Übersetzung mit eingeschränkter Geschwindigkeit verändert werden kann.

Wenn bei nicht still stehendem Variator (Zustandssignal E/F nimmt den Wert F an) das erste Zustandssignal A/B den Wert B aufweist, dann wird das vom Block 403 kommenden Stromsignal $I_b$ nicht begrenzt, was mittels Umlegen des Schalters 4047 erreicht wird. D. h. in diesem Fall, daß die Getriebeübersetzung schnell verstellt werden kann.

Bei stillstehendem Variator nimmt das dritte Zustandssignal den Wert E an, das heißt, das vom Block 403 kommenden Stromsignal $I_b$ wird nicht begrenzt.

Das Steuergerät 20 besitzt selbstverständlich eine Einrichtung zur Einstellung des Stroms durch das Ventil 16 entsprechend dem gewünschten Strom I.

Fig. 6 zeigt eine Ausgestaltung des Blocks 404 zur Bildung der Referenzdrehzahl $N_{s,ref}$. In dem Block 601 wird die Fahrzeuggeschwindigkeit $V_{Fz}$ in eine erste Referenzdrehzahl $N_r$ umgerechnet. Dazu wird die ermittelte Übersetzung $i_{ab}$ der abtriebsseitigen Getriebestufen 33 mit der Fahrzeuggeschwindigkeit und einer Konstanten multipliziert. Die so ermittelte erste Referenzdrehzahl $N_r$ wird dem Block 602 übermittelt, der Mittel zur Filterung der Referenzdrehzahl, z.B. einen Tiefpaßfilter und eine untere und obere Begrenzung des Anstiegs der Referenzdrehzahl beinhaltet. Die Filterung kann außerdem noch von weiteren Signalen 603 abhängig sein, die eine Größe repräsentieren, welche davon abhängig ist, ob sich das Fahrzeug in einem beschleunigenden oder verzögernden Zustand befindet. Ein solches Signal kann beispielsweise aus der Fahrpedalstellung und der Fahrzeuggeschwindigkeit gebildet werden. Der Filterblock kann darüber hinaus auch die gemessene Sekundärdrehzahl $N_s$ derart berücksichtigen, daß sich unter stationären Bedingungen die berechnete Referenzdrehzahl $N_{s,ref}$ an die Sekundärdrehzahl $N_s$ annähert.

Die Fig. 5 zeigt eine Ausgestaltung des Blocks 402. Die gewünschte Übersetzung $i_{soll}$ wird durch Division der Sollprimärdrehzahl $N_{p,soll}$ mit der Referenzdrehzahl $N_{s,ref}$ gebildet:

$$i_{soll} = N_{p,soll}/N_{s,ref}$$

Die gewünschte Übersetzung $i_{soll}$ wird durch die Schwellwertvergleiche 503 und 504 auf den unteren Grenzwert 502 und den oberen Grenzwert 501 begrenzt. Durch die Verwendung der gefilterten Referenzdrehzahl zur Ermittlung der gewünschten Übersetzung $i_{soll}$ kann der Einfluß von Triebstrangschwingungen auf die Übersetzungsregelung vorteilhaft reduziert werden.

In Fig. 7 ist der zentrale Block 403 aus Fig. 2a genauer dargestellt. Der Block 701 dient zunächst der Begrenzung der gewünschten Übersetzung $i_{soll}$ und zur Vermeidung eines ungewollten Überdrehens der Primärdrehzahl, wozu der Wert für den maximal zulässigen Übersetzungsgradienten (di/dt)max verwandt werden kann, welcher dem Block 701 von dem Block 504 aus Fig. 2b übermittelt wird. Der Block 701 berechnet zunächst aus den übermittelten Werten für die gewünschte Übersetzung beziehungsweise Sollübersetzung $i_{soll}$ durch Differenzieren den Übersetzungsgradienten $(di_{soll}/dt)$. Wenn der Übersetzungsgradient $(di_{soll}/dt)$ größer als der maximal zulässige Übersetzungsgradient (di/dt)max ist, dann berechnet der Block 701 aus der momentanen Übersetzung i und dem maximal zulässigen Übersetzungsgradienten (di/dt)max einen neuen Wert $i^*_{soll}$ für die gewünschte Übersetzung nach der Beziehung:

$$i*_{soll} = i + (di/dt)max * T,$$

wobei T die Abtastzeit des Berechnungsalgorithmus darstellt, also das Zeitintervall in dem die Berechnung durchgeführt wird.

Weiterhin überprüft der Block 701, ob die gemessene Primärdrehzahl $N_p$ einen Schwellwert $N_{p,max}$ überschreitet. Ist dies der Fall, so wird der Wert $i*_{soll}$ für die gewünschte Übersetzung stetig verringert.

Außerdem prüft der Block 701, ob das Produkt aus dem Wert $i*_{soll}$ für die gewünschte Übersetzung und der Sekundärdrehzahl $N_s$ größer als ein Schwellwert $N_{p,max}$ ist. Ist das der Fall, dann wird der Wert $i*_{soll}$ aus dem Quotient des Schwellwertes $N_{p,max}$ und der Referenzdrehzahl $N_{s,ref}$ ebenfalls neu berechnet.

Das von dem Block 701 gebildete Signal $i*_{soll}$ wird zusammen mit dem momentanen Wert für die Übersetzung i dem Block 702 übermittelt. Der Block 702 enthält einen PID-Regler mit einem nachgeschalteten Linearisierungsblock und bildet aus dem Signal $i*_{soll}$ und dem Signal i mit Hilfe des PID-Reglers ein Signal y, welches die gewünschte Geschwindigkeit oder Schnelligkeit der Änderung der Übersetzung beziehungsweise den gewünschten Übersetzungsgradienten repräsentiert. Das Signal y oder eine daraus abgeleitete Größe wird vorteilhaft zur Berechnung des Stromes $I_b$ verwandt. In einem besonders vorteilhaften Ausführungsbeispiel wird aus dem Signal y für die gewünschte Geschwindigkeit der Änderung der Übersetzung durch Multiplikation mit einem von der gemessenen Übersetzung i abhängigen Kennwert K(i), welcher aus einem Kennfeld abgelesen wird, ein Signal für den gewünschten Volumenstrom $Q_{p,soll}$ in die primäre Fluidkammer 11 berechnet:

$$Q_{p,soll} = y * K(i)$$

Der Block 703 enthält einen Algorithmus zur Einstellung des gewünschten Volumenstroms im Stillstand des Variators. Der Block 703 ist aktiv, wenn das Statussignal E/F des Blocks 405 den Zustand E annimmt. Über den Schalter 7010 ist dann der Block 703 mit dem Block 706 verbunden.

Der Block 705 berechnet aus dem übermittelten Wert für die momentane Übersetzung i den Übersetzungsgradienten (di/dt). Aus dem Übersetzungsgradienten (di/dt), dem gemessenen Sekundärdruck $p_s$ und dem von dem Block 501 in Fig. 2b übermittelten Wert für das primärseitig wirkende Drehmoment $M_{prim}$ und gegebenenfalls weiteren Signalen wird ein geschätzter Primärdruck $p_p$ ermittelt, welcher an der Antriebsseite 7 auf den Kegelscheibensatz 25 einwirkt. Falls ein Primärdrucksensor vorhanden ist, kann das Primärdrucksignal $p_p$ auch gemessen werden.

Wenn das Statussignal E/F des Blocks 405 den Wert F annimmt, verbindet der Schalter 7010 den Block 702 mit dem Block 706. Der Block 706 berechnet dann aus dem Signal $Q_{p,soll}$ für den gewünschten Volumenstrom des Fluids in die primäre Fluidkammer 11 und dem Signal für den Sekundärdruck $p_s$ und einem von dem Block 705 übermittelten Wert für den Primärdruck $p_p$ das Steuersignal $I_b$ nach einem hydraulischen Modell des Primärventils 15.

Der Block 704 berechnet aus dem Signal $Q_{p,soll}$ für den gewünschten Volumenstrom und dem Signal i für die momentane Übersetzung einen minimalen Sekundärdruck $p_{s,USMIN}$. Der minimale Sekundärdruck $p_{s,USMIN}$ ist der abtriebsseitig wirkende Sekundärdruck, der wenigstens bereitgestellt werden muß, um mit dem Primärventil 15 den gewünschten Volumenstrom $Q_{p,soll}$ bei schnellen Hochschaltungen realisieren zu können. Er stellt also einen unteren Grenzwert dar, der nicht unterschritten werden sollte. Würde der Sekundärdruck kleiner als der minimale Sekundärdruck $p_{s,USMIN}$ werden, könnte die Druckdifferenz am Primärventil 15 so klein werden, daß der maximale Öffnungsquerschnitt am Primärventil nicht mehr ausreichen könnte, um den gewünschten Volumenstrom noch realisieren zu können. Es ist daher vorteilhaft, den Sekundärdruck bei nicht stillstehendem Variator wenigstens auf den Wert $p_{s,USMIN}$ zu erhöhen, um an der Primärseite 7 den dort erforderlichen Volumenstrom mit dem Primärventil 15 noch einstellen zu können. Der Block 704 verwendet in einer vorteilhaften Ausführung der Erfindung die folgende Berechnungsvorschrift zur Bildung des minimalen Sekundärdrucks $p_{s,USMIN}$:

$$p_{s,USMIN} = (Q_{p,soll})^2 * K_{s,USMIN}(i) ,$$

wobei $K_{s,USMIN}(i)$ ein von dem Signal i für die Übersetzung abhängiger Parameter ist.

Die Fig. 8 zeigt einen Block 501, der eine Begrenzung des Sollsekundärdrucks $p_{soll,sek}$ auf den Wert $p_{s,USMIN}$ vornimmt. Der in Fig. 8 dargestellte Block 501 ist eine Modifikation des in der deutschen Patentanmeldung DE 195 48 722 A1 beschriebenen Bandspannungsreglers des Umschlingungsteils. Es wird daher an dieser Stelle nur auf die im Vergleich zu dem dort dargestellten Spannungsregler abgeänderten Teile eingegangen. Wie in Fig. 8 zu erkennen ist, wird das von dem Block 403 aus Fig. 2a übermittelte Signal $p_{s,USMIN}$ verwandt, um den von dem Block 501 ausgegebenen Wert $p_{soll,sek}$ auf den unteren Wert $p_{s,USMIN}$ zu begrenzen. Dies geschieht durch den Vergleich 15020.

Der in Fig. 8 dargestellte Bandspannungsregler dient auch zur Vermeidung von Schlupf des Umschlingungsteils bei stehendem Variator, das heißt, stehendem Fahrzeug und Auftreten von hohen zu übertragenden Drehmomenten. Für den Fall des stehenden Variators wird daher das Zustandssignal E/F verwandt, um den Schalter 15018 auf den Wert E zu stellen, so daß dem Block 15019 ein Wert $P_{s,min,low}$ übermittelt wird. Der Wert $P_{s,min,low}$ ergibt sich aus dem Signal $P_{min}$, das den im Block 15008 berechneten minimalen Sekundärdruck angibt, durch Multiplikation mit einem Sicherheitsfaktor $S_{f,low}$ im Block 15016. In der Stellung F wird dem Block 15019 dagegen der Wert 0 aus dem Speicher 15017 übermittelt. Der Block 15019 liefert als Ausgangssignal den größeren der beiden Werte $P_{s,min,low}$ und $P_{res}$. Zeigt das Zustandssignal den Wert E an, wird daher der Sollsekundärdruck $p_{soll,sek}$ auf den Wert $P_{s,min,low}$ begrenzt, wobei davon auszugehen ist, daß dieser Wert größer als der Wert $p_{s,USMIN}$ ist. Mit anderen Worten, bei stillstehendem Variator wird ein höherer Sicherheitsfaktor für große Drehmomente realisiert, als für einen sich drehenden Variator.

Der von dem Block 15013 ausgegebene Signalwert für den Sollsekundärdruck $p_{soll,sek}$ wird verwandt, um mit dem Druckbegrenzungsventil 14 den Öldruck an der Sekundärseite entsprechend zu regeln.

Fig. 9 zeigt einen in dem Block 503 von Fig. 2b durchgeführten Berechnungsablauf zur Berechnung des minimalen Primärdrucks $P_{p,min}$, der mindestens eingestellt werden muß, um den Schlupf an der Primärscheibe zu vermeiden. Der Block 7020 berechnet mit einem Kennfeld aus dem Primärdrehmomentsignal $M_{prim}$ und der Übersetzung i ein Drucksignal. Davon wird ein Wert $p_{p,z}$ abgezogen, der mit dem Block 7030 aus dem Wert für die Primärdrehzahl $N_p$ berechnet wird. Der Primärdruck $p_{p,z}$ entspricht den zentrifugalen Anpreßkräften in der primären. Fluidkammer 11. Der Block 7040 berechnet noch einen von der Übersetzung i abhängigen Reservedruck der zum Ausgangssignal des Block 7020 addiert wird. Das Ergebnis ist ein Signal für den minimalen Primärdrucks $P_{p,min}$.

Fig. 10 zeigt einen Berechnungsablauf, welcher in dem Block 504 in Fig. 2b durchgeführt wird. Der Block 8050 in Fig. 10 berechnet aus der Sekundärdrehzahl $N_s$ einen Sekundärdruck, der den zentrifugalen Anpreßkräften in der sekundären Fluidkammer 12 entspricht. Dieser Wert wird zu dem gemessenen Wert für den Sekundärdruck $p_s$ addiert. Die Summe wird mit einem Faktor k im Block 8070 multipliziert und im Block 8080 durch einen Wert $K_{PM,SE}$ geteilt, der in dem Block 8060 aus den Werten für $M_{prim}$, $P_s$ und i berechnet wird. Der Wert $K_{PM,SE}$ gibt das Verhältnis von primärer zu sekundärer Anpreßkraft im Stationärbetrieb an. Das Ergebnis aus Block 8080 wird um den Wert für den Primärdruck $p_{p,z}$ für die zentrifugale Anpressung und den minimalen Primärdruck $p_{p,min}$, welche beiden Werte von dem Block 503 in Fig. 2b geliefert werden, reduziert. Das Ergebnis ist die Primärdruckdifferenz $\Delta p_{DS}$, die für eine Rückschaltung maximal zur Verfügung steht. Der Wert für die Primärdruckdifferenz $\Delta p_{DS}$ wird im Block 8090 mit der Primärdrehzahl $N_p$ und im Block 8110 mit einem von der Übersetzung i abhängigen Wert multipliziert, der im Block 8100 ermittelt wurde. Das von dem Block 8110 gelieferte Ergebnis ist der maximale Übersetzungsgradient (di/dt)max , welcher dem Block 701 in Fig. 7 übermittelt wird.

## Patentansprüche

1. Steuerschaltung zur Erzeugung eines Steuersignals (I) zur Steuerung der Übersetzungseinstellung eines in seiner Übersetzung stufenlos verstellbaren Umschlingungsgetriebes mit einer Antriebsseite (7), einer Abtriebsseite (8) und einem von dem Steuersignal (I) angesteuerten Primärventil (15) zur Einstellung der Getriebeübersetzung, welche Steuerschaltung Mittel zur Erzeugung des Steuersignals (I) in Abhängigkeit von der Steuerschaltung übermittelten Betriebsparametern des Fahrzeugs aufweist, wobei das Steuersignal (I) in Abhängigkeit von einem Wert (y) für eine gewünschte Geschwindigkeit der Übersetzungsänderung oder einer daraus abgeleiteten Größe erzeugt wird und der Wert (y) für die gewünschte Geschwindigkeit der Übersetzungsänderung aus den der Steuerschaltung übermittelten Betriebsparametern ermittelt wird, **dadurch gekennzeichnet, dass** aus dem Wert (y) für die gewünschte Geschwindigkeit der Übersetzungsänderung und gegebenenfalls weiteren Betriebsparametern ein Wert ($Q_{p,soll}$) als abgeleitete Größe gebildet wird, welcher einen gewünschten Volumenstrom eines Fluids in eine primäre Fluidkammer (11) der Antriebsseite (7) repräsentiert, und dass das Steuersignals (I) in Abhängigkeit von dem Wert ($Q_{p,soll}$) für den Volumenstrom erzeugt wird.

2. Steuerschaltung nach Anspruch 1, **dadurch gekennzeichnet, daß** der Wert (y) für die gewünschte Geschwindigkeit der Übersetzungsänderung in Abhängigkeit von einer von der Steuerschaltung aus den Betriebsparametern berechneten Sollübersetzung ($i^*_{soll}$) ermittelt wird.

3. Steuerschaltung nach Anspruch 1, **dadurch gekennzeichnet, daß** der Wert (y) für die gewünschte Geschwindigkeit der Übersetzungsänderung in Abhängigkeit von einem aus den Betriebsparametern ermittelten Zustandssignal (E/F) ermittelt wird, welches Zustandssignal den Bewegungszustand, stillstehend oder nicht stillstehend, eines Variator (6) des Umschlingungsgetriebes beschreibt.

4. Steuerschaltung nach Anspruch 1, **dadurch gekennzeichnet, daß** aus dem Wert (y) für die gewünschte Geschwindigkeit der Änderung der Übersetzung durch Multiplikation mit einem von der gemessenen Übersetzung (i) abhängigen, aus einem Kennfeld abgelesen Kennwert K(i) der Wert für den gewünschten Volumenstrom ($Q_{p,soll}$) in die primäre Fluidkammer (11) berechnet wird.

5. Steuerschaltung nach Anspruch 2, **dadurch gekennzeichnet, daß** der für die Bildung des Wertes (y) der gewünschten Geschwindigkeit der Übersetzungsänderung verwandte Wert ($i^*_{soll}$) für die Sollübersetzung in Abhängigkeit von einem aus den Betriebsparametern berechneten Wert (dI/dt)max für den maximal zulässigen Übersetzungsgradienten berechnet wird.

6. Steuerschaltung nach Anspruch 2, **dadurch gekennzeichnet, daß** der für die Bildung des Wertes (y) der gewünschten Geschwindigkeit der Übersetzungsänderung verwandte Wert ($i^*_{soll}$) für die Sollübersetzung in Abhängigkeit von einem aus den Betriebsparametern berechneten Wert für eine Sollprimärdrehzahl ($N_{p,soll}$) berechnet wird.

7. Steuerschaltung nach Anspruch 6, **dadurch gekennzeichnet, daß** die Sollprimärdrehzahl ($N_{p,soll}$) in Abhängigkeit von einem die Fahrzeuggeschwindigkeit ($V_{Fz}$) und einem die Stellung ($\alpha$) des Fahrpedals repräsentierenden Betriebsparameter ermittelt wird.

8. Steuerschaltung nach Anspruch 2, **dadurch gekennzeichnet, daß** der für die Bildung des Wertes (y) der gewünschten Geschwindigkeit der Übersetzungsänderung verwandte Wert ($i^*_{soll}$) für die Sollübersetzung in Abhängigkeit von einer Referenzdrehzahl ($N_{s,ref}$) gebildet wird.

9. Steuerschaltung nach Anspruch 8, **dadurch gekennzeichnet, daß** die Referenzdrehzahl ($N_{s,ref}$) in Abhängigkeit von einem die Fahrzeuggeschwindigkeit ($V_{Fz}$) repräsentierenden Betriebsparameter und einem die Sekundärdrehzahl ($N_s$) repräsentierenden Betriebsparameter berechnet wird.

10. Verfahren zur Erzeugung eines Steuersignals (I) zur Steuerung der Übersetzungseinstellung eines in seiner Übersetzung stufenlos verstellbaren Umschlingungsgetriebes mit einer Antriebsseite (7), einer Abtriebsseite (8) und einem von dem Steuersignal (I) angesteuerten Primärventil (15) zur Einstellung der Getriebeübersetzung, bei welchem Verfahren ein Steuersignal (I) in Abhängigkeit von der Steuerschaltung übermittelten Betriebsparametern des Fahrzeugs erzeugt wird, wobei das Steuersignal (I) in Abhängigkeit von einem Wert (y) für eine gewünschte Geschwindigkeit der Übersetzungsänderung oder einer daraus abgeleiteten Größe erzeugt wird und der Wert (y) für die gewünschte Geschwindigkeit der Übersetzungsänderung aus den Betriebsparametern ermittelt wird, **dadurch gekennzeichnet, dass** aus dem Wert (y) für die gewünschte Geschwindigkeit der Übersetzungsänderung und gegebenenfalls weiteren Betriebsparametern ein Wert ($Q_{p,soll}$) gebildet wird, welcher einen gewünschten Volumenstrom eines Fluids in eine primäre Fluidkammer (11) der Antriebsseite (7) repräsentiert, und dass das Steuersignals (I) in Abhängigkeit von dem Wert ($Q_{p,soll}$) für den Volumenstrom erzeugt wird.

11. Verfahren nach Anspruch 10, **dadurch gekennzeichnet, daß** der Wert (y) für die gewünschte Geschwindigkeit der Übersetzungsänderung in Abhängigkeit von einer von der Steuerschaltung aus den Betriebsparametern berechneten Sollübersetzung ($i^*_{soll}$) ermittelt wird.

12. Verfahren nach Anspruch 10, **dadurch gekennzeichnet, daß** der Wert (y) für die gewünschte Geschwindigkeit der Übersetzungsänderung in Abhängigkeit von einem aus den Betriebsparametern ermittelten Zustandssignal (E/F) ermittelt wird, welches Zustandssignal den Bewegungszustand, stillstehend oder nicht stillstehend, eines Variator (6) des Umschlingungsgetriebes beschreibt.

13. Verfahren nach Anspruch 10, **dadurch gekennzeichnet, daß** aus dem Wert (y) für die gewünschte Geschwindigkeit der Änderung der Übersetzung durch Multiplikation mit einem von der gemessenen Übersetzung (i) abhängigen, aus einem Kennfeld abgelesen Kennwert K(i) der Wert für den gewünschten Volumenstrom ($Q_{p,soll}$) in die primäre Fluidkammer (11) berechnet wird.

14. Verfahren nach Anspruch 11, **dadurch gekennzeichnet, daß** der für die Bildung des Wertes (y) der gewünschten Geschwindigkeit der Übersetzungsänderung verwandte Wert ($i^*_{soll}$) für die Sollübersetzung in Abhängigkeit von einem aus den Betriebsparametern berechneten Wert (dI/dt)max für den maximal zulässigen Übersetzungsgradienten berechnet wird.

**15.** Verfahren nach Anspruch 11, **dadurch gekennzeichnet, daß** der für die Bildung des Wertes (y) der gewünschten Geschwindigkeit der Übersetzungsänderung verwandte Wert ($i^*_{soll}$) für die Sollübersetzung in Abhängigkeit von einem aus den Betriebsparametern berechneten Wert für eine Sollprimärdrehzahl ($N_{p,soll}$) berechnet wird, welche Sollprimärdrehzahl eine gewünschten Übersetzung des Variators repräsentiert.

## Claims

**1.** Control circuit for generating a control signal (I) for controlling the transmission ratio setting of a wrap-around gear mechanism whose transmission ratio is continuously variable and which has a drive input side (7), a drive output side (8) and a primary valve (15), which is controlled by the control signal (I), for setting the transmission ratio, said control circuit having means for generating the control signal (I) as a function of vehicle operating parameters which are transmitted to the control circuit, the control signal (I) being generated as a function of a value (y) for a desired speed of the change in transmission ratio or as a function of a variable derived therefrom, and the value (y) for the desired speed of the change in transmission ratio being determined from the operating parameters transmitted to the control circuit, **characterized in that** a value ($Q_{p,nom}$) is formed as a derived variable from the value (y) for the desired speed of the change in transmission ratio and if appropriate from other operating parameters, said value ($Q_{p,nom}$) representing a desired volume flow rate of a fluid into a primary fluid chamber (11) of the drive input side (7), and **in that** the control signal (I) is generated as a function of the value ($Q_{p,nom}$) for the volume flow rate.

**2.** Control circuit according to Claim 1, **characterized in that** the value (y) for the desired speed of the change in transmission ratio is determined as a function of a nominal transmission ratio ($i^*_{nom}$) which is calculated by the control circuit from the operating parameters.

**3.** Control circuit according to Claim 1, **characterized in that** the value (y) for the desired speed of the change in transmission ratio is determined as a function of a state signal (E/F) which is determined from the operating parameters, said state signal (E/F) describing the movement state, stationary or non-stationary, of a variator (6) of the wrap-around gear mechanism.

**4.** Control circuit according to Claim 1, **characterized in that** the value for the desired volume flow rate ($Q_{p,nom}$) into the primary fluid chamber (11) is calculated from the value (y) for the desired speed of the change in transmission ratio by means of multiplication by a characteristic value K(i) which is dependent on the measured transmission ratio (i) and is read out from a characteristic diagram.

**5.** Control circuit according to Claim 2, **characterized in that** the value ($i^*_{nom}$) for the nominal transmission ratio, said value ($i^*_{nom}$) being used for forming the value (y) of the desired speed of the change in transmission ratio, is calculated as a function of a value (dI/dt)max for the maximum permissible transmission ratio gradient, said value (dI/dt)max being calculated from the operating parameters.

**6.** Control circuit according to claim 2, **characterized in that** the value ($i^*_{nom}$) for the nominal transmission ratio, said value ($i^*_{nom}$) being used for forming the value (y) of the desired speed of the change in transmission ratio, is calculated as a function of a value for a nominal primary rotational speed ($N_{p,nom}$), said value for a nominal primary rotational speed ($N_{p,nom}$) being calculated from the operating parameters.

**7.** Control circuit according to Claim 6, **characterized in that** the nominal primary rotational speed ($N_{p,nom}$) is determined as a function of an operating parameter which represents the vehicle speed ($V_{Fz}$) and as a function of an operating parameter which represents the position ($\alpha$) of the accelerator pedal.

**8.** Control circuit according to Claim 2, **characterized in that** the value ($i^*_{nom}$) for the nominal transmission ratio, said value ($i^*_{nom}$) being used for forming the value (y) of the desired speed of the change in transmission ratio, is formed as a function of a reference rotational speed ($N_{s,ref}$).

**9.** Control circuit according to Claim 8, **characterized in that** the reference rotational speed ($N_{s,ref}$) is calculated as a function of an operating parameter which represents the vehicle speed ($V_{Fz}$) and as a function of an operating parameter which represents the secondary rotational speed ($N_s$).

**10.** Method for generating a control signal (I) for controlling the transmission ratio setting of a wrap-around gear mechanism whose transmission ratio is continuously variable and which has a drive input side (7), a drive output side (8) and a primary valve (15), which is controlled by the control signal (I), for setting the transmission ratio, in which method a control signal (I) is generated as a function of vehicle operating parameters which are transmitted to the control circuit, the control signal (I) being generated as a function of a value (y) for a desired speed of the change in transmission ratio or as a function of a variable derived therefrom, and the value (y) for the desired speed of the change in transmission ratio being determined from the operating parameters, **characterized in that** a value ($Q_{p,nom}$) is formed from the value (y) for the desired speed of the change in transmission ratio and if appropriate from other operating parameters, said value ($Q_{p,nom}$) representing a desired volume flow rate of a fluid into a primary fluid chamber (11) of the drive input side (7), and **in that** the control signal (I) is generated as a function of the value ($Q_{p,nom}$) for the volume flow rate.

11. Method according to Claim 10, **characterized in that** the value (y) for the desired speed of the change in transmission ratio is determined as a function of a nominal transmission ratio ($i^*_{nom}$) which is calculated by the control circuit from the operating parameters.

12. Method according to Claim 10, **characterized in that** the value (y) for the desired speed of the change in transmission ratio is determined as a function of a state signal (E/F) which is determined from the operating parameters, said state signal (E/F) describing the movement state, stationary or non-stationary, of a variator (6) of the wrap-around gear mechanism.

13. Method according to Claim 10, **characterized in that** the value for the desired volume flow rate ($Q_{p,nom}$) into the primary fluid chamber (11) is calculated from the value (y) for the desired speed of the change in transmission ratio by means of multiplication by a characteristic value K(i) which is dependent on the measured transmission ratio (i) and is read out from a characteristic diagram.

14. Method according to Claim 11, **characterized in that** the value ($i^*_{nom}$) for the nominal transmission ratio, said value ($i^*_{nom}$) being used for forming the value (y) of the desired speed of the change in transmission ratio, is calculated as a function of a value (dI/dt)max for the maximum permissible transmission ratio gradient, said value (dI/dt)max being calculated from the operating parameters.

15. Method according to claim 11, **characterized in that** the value ($i^*_{nom}$) for the nominal transmission ratio, said value ($i^*_{nom}$) being used for forming the value (y) of the desired speed of the change in transmission ratio, is calculated as a function of a value for a nominal primary rotational speed ($N_{p,nom}$), said value for a nominal primary rotational speed ($N_{p,nom}$) being calculated from the operating parameters, and said nominal primary rotational speed representing a desired transmission ratio of the variator.

**Revendications**

1. Circuit de commande pour générer un signal de commande (I) du réglage de rapport de transmission d'une transmission à courroie à variation continue, comportant un côté de commande (7), un côté de sortie (8) et une soupape primaire (15) excitée par le signal de commande (I) en vue de régler le rapport de transmission, avec des moyens pour générer le signal de commande (I) en fonction de paramètres de fonctionnement du véhicule transmis par le circuit de commande, le signal de commande (I) étant généré en fonction d'une valeur (y) d'une vitesse souhaitée de variation du rapport de transmission ou d'une grandeur dérivée de celle-ci, et la valeur (y) de la vitesse souhaitée de variation du rapport de transmission étant déterminée à partir des paramètres de fonctionnement transmis au circuit de commande,
   **caractérisé en ce que**
   à partir de la valeur (y) pour la vitesse souhaitée de variation du rapport de transmission, et le cas échéant à partir d'autres paramètres de fonctionnement, une valeur ($Q_{p,soll}$) est formée en tant que grandeur dérivée, laquelle représente un débit volumique souhaité d'un fluide s'écoulant dans une chambre de fluide primaire (11) du côté de commande (7),
   et le signal de commande (I) est généré en fonction de la valeur ($Q_{p,soll}$) du débit volumique.

2. Circuit de commande selon la revendication 1,
   **caractérisé en ce que**
   la valeur (y) de la vitesse souhaitée de variation du rapport de transmission est déterminée en fonction d'un rapport de transmission de consigne ($i^*_{soll}$) calculé par le circuit de commande à partir des paramètres de fonctionnement.

**3.** Circuit de commande selon la revendication 1,
**caractérisé en ce que**
la valeur (y) de la vitesse souhaitée de variation du rapport de transmission est déterminée en fonction d'un signal d'état (E/F), déterminé à partir des paramètres de fonctionnement et qui décrit l'état de mouvement (à l'arrêt ou non à l'arrêt) d'un variateur (6) de la transmission.

**4.** Circuit de commande selon la revendication 1,
**caractérisé en ce que**
à partir de la valeur (y) de la vitesse souhaitée de variation du rapport de transmission, la valeur du débit volumétrique ($Q_{p,soll}$) souhaité du fluide s'écoulant dans la chambre de fluide primaire (11) est calculée par multiplication par une valeur caractéristique K(i), relevée à partir d'un diagramme caractéristique et dépendant du rapport de transmission (i) mesuré.

**5.** Circuit de commande selon la revendication 2,
**caractérisé en ce que**
la valeur (i*soll) du rapport de transmission de consigne, utilisée pour former la valeur (y) de la vitesse souhaitée de variation du rapport de transmission, est calculée en fonction d'une valeur ((dI/dt)max du gradient de rapport de transmission maximal admissible, calculée à partir des paramètres de fonctionnement.

**6.** Circuit de commande selon la revendication 2,
**caractérisé en ce que**
la valeur ($i^*_{soll}$) du rapport de transmission de consigne, utilisée pour former la valeur (y) de la vitesse souhaitée de variation du rapport de transmission, est calculée en fonction d'une valeur, calculée à partir des paramètres de fonctionnement, d'une vitesse de rotation primaire de consigne (Np,soll).

**7.** Circuit de commande selon la revendication 6,
**caractérisé en ce que**
la vitesse de rotation primaire de consigne ($N_{p,soll}$) est déterminée en fonction d'un paramètre de fonctionnement représentant la vitesse du véhicule ($V_{pz}$) et d'un paramètre de fonctionnement représentant la position (□) de la pédale de l'accélérateur.

**8.** Circuit de commande selon la revendication 2,
**caractérisé en ce que**
la valeur ($i^*_{soll}$) du rapport de transmission de consigne, utilisée pour la formation de la valeur (y) de la vitesse souhaitée de variation du rapport de transmission, est formée en fonction d'une vitesse de rotation de référence ($N_{s,ref}$).

**9.** Circuit de commande selon la revendication 8,
**caractérisé en ce que**
la vitesse de rotation de référence (Ns,ref) est calculée en fonction d'un paramètre de fonctionnement représentant la vitesse du véhicule ($V_{pz}$) et d'un paramètre de fonctionnement représentant la vitesse de rotation secondaire ($N_s$).

**10.** Procédé pour générer un signal de commande (I) du réglage de rapport de transmission d'une transmission à courroie à variation continue, comportant un côté de commande (7), un côté de sortie (8) et une soupape primaire (15) excitée par le signal de commande (I) en vue de régler le rapport de transmission,
suivant lequel un signal de commande (I) est produit en fonction de paramètres de fonctionnement transmis au circuit de commande, le signal de commande (I) étant généré en fonction d'une valeur (y) pour une vitesse souhaitée de variation du rapport de transmission ou d'une grandeur dérivée de celle-ci, et la valeur (y) pour la vitesse souhaitée de variation du rapport de transmission étant déterminée à partir des paramètres de fonctionnement,
**caractérisé en ce qu'**
à partir de la valeur (y) pour la vitesse souhaitée de variation du rapport de transmission, et le cas échéant à partir d'autres paramètres de fonctionnement, on forme une valeur ($Q_{p,soll}$) représentant un débit volumique souhaité d'un fluide s'écoulant dans une chambre de fluide primaire (11) du côté de commande (7),
et le signal de commande (I) est généré en fonction de la valeur ($Q_{p,soll}$) pour le débit volumique.

**11.** Procédé selon la revendication 10,
**caractérisé en ce que**
la valeur (y) de la vitesse souhaitée de variation de rapport de transmission est déterminée en fonction d'un rapport de transmission de consigne (i*$_{soll}$) calculé par le circuit de commande à partir des paramètres de fonctionnement.

**12.** Procédé selon la revendication 10,
**caractérisé en ce que**
la valeur (y) de la vitesse souhaitée de variation de rapport de transmission est déterminée en fonction d'un signal d'état (E/F), déterminé à partir des paramètres de fonctionnement et qui décrit l'état de mouvement (à l'arrêt ou non à l'arrêt) d'un variateur (6) de la transmission.

**13.** Procédé selon la revendication 10,
**caractérisé en ce que**
à partir de la valeur (y) de la vitesse souhaitée de variation du rapport de transmission, la valeur du débit volumétrique (Q$_{p,soll}$) souhaité du fluide s'écoulant dans la chambre de fluide primaire (11) est calculée par multiplication par une valeur caractéristique K(i), relevée à partir d'un diagramme caractéristique et dépendant du rapport de transmission (i) mesuré.

**14.** Procédé selon la revendication 11,
**caractérisé en ce que**
la valeur (i*soll) du rapport de transmission de consigne, utilisée pour former la valeur (y) de la vitesse souhaitée de variation du rapport de transmission, est calculée en fonction d'une valeur ((dI/dt)max du gradient de rapport de transmission maximal admissible, calculée à partir des paramètres de fonctionnement.

**15.** Procédé selon la revendication 11,
**caractérisé en ce que**
la valeur (i*soll) du rapport de transmission de consigne, utilisée pour former la valeur (y) de la vitesse souhaitée de variation du rapport de transmission, est calculée en fonction d'une valeur, calculée à partir des paramètres de fonctionnement, d'une vitesse de rotation primaire de consigne (N$_{p,soll}$) qui représente un rapport de transmission souhaité du variateur.

EP 1 461 545 B1

# Fig. 1

Ps

Np

Ns

$\left(\dfrac{di}{dt}\right)_{max}$

Mprim

__407__ i

$V_{fz}$

α

...

Np,soll

__401__ __402__ isoll i

__403__ Ps,usmin

$I_b$

Ns,ret

__404__

$i_{ab}$

isoll

i

E/F
C/D
A/B

Np

__405__ __406__

I

## Fig. 2a

EP 1 461 545 B1

Fig. 2b

Fig. 3

EP 1 461 545 B1

EP 1 461 545 B1

**Fig. 4**

Np,soll

Ns,ret

503

504

Min

Max

i_soll

501

502

**Fig. 5**

601

603

602

Vfz

iab

Nr

Ns

Ns,ret

**Fig. 6**

$\left(\dfrac{di}{dt}\right)_{max}$

isoll

i

Np

Ns,ret

E/F

Mprim

Ps

701

isoll

702

Qp,soll

701

$P_{S,USMIN}$

7010

F

E

703

705

pp

706

$I_b$

# Fig. 7

EP 1 461 545 B1

Fig. 8

Fig. 9

Fig. 10

EP 1 461 545 B1